# EUROPEAN PATENT APPLICATION

(11) **EP 4 725 767 A1**
(43) Date of publication of application: **15.04.2026**
(21) Application number: 24206326.1
(22) Date of filing: 14.10.2024
(51) Int. Cl.: B60R 1/20, G03B 11/04, H04N 23/56, H04N 23/57, G03B 15/05, G03B 30/00

(54) **CAMERA ASSEMBLY FOR A DRIVER MONITORING SYSTEM WITH GLARE PROTECTION**

(71) Applicant: Magna Electronics Sweden AB, 447 37 Vårgårda (SE)
(72) Inventor: HOMUTESCU, Adrian, 700051 Iasi (RO); CAZACU, Vlad, 700051 Iasi (RO)
(74) Representative: Reichert & Lindner Partnerschaft Patentanwälte

(57) **Abstract**

A camera assembly (10) for a driver monitoring system (1) is disclosed with glare protection. A cap (16) for at least one LED (20) is provided to define an opening (21) through which a light cone (27) exits. The cap (16) is defined by a pass-through section (17) connected to at least one first sidewall (18) and one second sidewall (19). The first sidewall (18) is higher than the second sidewall (19) and the first sidewall (18) positioned close to the lens (12) of the camera assembly (10).

## Description

The invention relates to camera assembly for a driver monitoring system with glare protection.

The camera assembly including a lens, mounted on a surface of a front face of the camera assembly. For illumination purposes at least one light-emitting diode is mounted on a printed circuit board, which itself is positioned on the surface of the front face of the camera assembly. The at least one LED is positioned aside from the lens of the camera assembly. An optical filter is spaced apart from the lens and the at least one light-emitting diode

The LEDs in surface-mount technology are used in a wide variety of devices in diverse areas of technology. Such LEDs are mounted on a circuit carrier, often a printed circuit board (PCB). An undesired effect of the filter presence consists of the reflections from the inner side of the filter back to the lens and the optical sensor. This is particularly a problem with smart-bright pupil and bright pupil architectures and especially in those systems where the LEDs are located very close to the lens. Such effect causes a poor quality of the images captured by the camera. More glare is present on the side of the captured picture where the LEDs (IR-LEDs) are close.

As a minimal effect, the side of the picture close to the LEDs is unusable for determining the main functions of the driver monitoring system as glance direction, distraction, drowsiness etc., case when certain positions of the driver in the field of view will not return a diagnostic result. In a worst-case scenario, the picture will not be useable at all due to extensively poor contrast.

The expensive way to diminish the glare is to improve the quality of the filter material and/or add antireflection coatings, on either side of the filter or both. Another means to reduce glare is to make the camera parallel to the filter and/or bring the camera closer to the filter. These solutions bring limitations to the installation options in the vehicle due to dimensional tolerances.

It is an object of the invention to come up with an inexpensive solution for reducing glare, that has a minimal impact on the design of the camera assembly and provides a mechanical protection as well for the at least one LED on the printed circuit board.

The above object is achieved by a camera assembly for a driver monitoring system with the features of as claimed in claim 1.

The camera assembly with reduced glare, is defined by a pass-through section connected to at least one first sidewall and one second sidewall. Moreover, the cap is positioned such on the printed circuit board that each of the at least one light-emitting diode passes light thorough a respective opening of the pass-through section. The cap is arranged such that the first sidewall of the cap is next to the lens of the camera assembly. The first sidewall, which points towards the lens, has a height which is greater than a height of the second sidewall.

The advantage of the camera assembly is that the amount of reflections bouncing back from the filter is reduced by adding a mechanical device, cap, to the printed circuit board. Additionally, the cap is easily adjustable for the specific needs to reduce glare in a certain architecture.

The first sidewall blocks harmful rays of a light cone from reaching the lens of the camera assembly. The light cone is defined by an opening in the pass-through section of the primary rays emanating from the least one light-emitting diode covered by the cap.

According to an advantageous embodiment, the cap, to be positioned over the at least one LED on the printed circuit board, fully surrounds the at least one LED. The cap is defined by the first sidewall, the second sidewall, the interconnecting pass-through section and parallel sidewalls. Each of the parallel sidewalls connects the first sidewall and the second sidewall.

The advantage of the embodiment is achieved by means of adding to the printed circuit board a cap (dedicated Surface Mounted Device (SMD)) that can be easily designed, produced and populated according to the case-by-case need to decrease the glare (unwanted light).

With the invention, a minimum of one anti-glare SMD device (cap) is added on the LED, which is part of the printed circuit board. The cap is easily adjustable for the specific need to reduce glare in a certain architecture, with fixed contributors like LED cone (angle), light power (irradiance), LED to-lens relative position, filter material, filter-to-lens relative position (distance and angle) that produce a picture with a certain number of unwanted reflections.

The cap (SMD device) can be added for mechanical protection of the LED. Basically, half of the rays exiting the mechanical protection device can get by single or multiple reflections to enter the lens and generate glare. With the new, anti-glare cap the most harmful rays (in the immediate vicinity of the lens) are blocked or reflected away, by means of geometry features. The useful rays are allowed to pass. The footprint can be accommodated on the printed circuit board with small space consumption.

According to a further embodiment of the invention the cap (SMD-device) to be positioned over the at least one LED on the printed circuit board, is defined by the first sidewall, the second sidewall and the interconnecting pass-through section. The cap is open on both sides. The first sidewall and the second sidewall can be perpendicular to the interconnecting pass-through section. The cap is produced by a bending technology.

This embodiment is advantageous with respect to the embodiment previous described as tooling for bending technology is less expensive than tooling for deep drawing technology.

The cap can have extended feet, if better robustness is desired, however this is not an essential aspect of the invention.

In a more specific variant of this embodiment the support portion is shaped out of one piece of sheet metal. Both sidewalls may be perpendicular to the pass-through section. As a non-limiting example, the sheet metal may have a thickness of 0,2 mm. The cover portion may also be made of sheet metal. Using sheet metal as material has the additional advantage of providing increased heat extraction.

The height of the first sidewall corresponds to an obscured angle 26. The angle 26 needed to be obscured, with a specific application, in order to reduce glare, which can be computed and easily implemented with slight adjustments to the cap tooling. The height of the first sidewall is above the top plane of the front face of the camera assembly and can commonly range between 1 mm and 4 mm, although higher first sidewalls (ribs) can also be executed.

According to a further embodiment, the first sidewall is provided with sealing. The sealing is made of a flexible material, like rubber or silicone. The sealing is positioned on top of the first sidewall and extends between the first sidewall and the bottom side of filter to block light from the LEDs reaching the lens of the camera assembly.

Below, the invention and its advantages will be discussed with reference to the accompanying schematic figures.
**Figure 1** is a schematic representation of an embodiment of the placement of a driver monitoring system camera inside a vehicle.
**Figure 2** shows a perspective partial view of the camera assembly according to the invention.
**Figure 3** shows a side view of the camera assembly according to an embodiment of the invention.
**Figure 4** shows a side view of the camera assembly according to a further embodiment of the invention.
**Figure 5** shows a perspective view of a cap according to one embodiment of the invention.
**Figure 6** is a side view of the camera assembly according to a further embodiment of the invention.
**Figure 7** is a perspective view of a further embodiment of the cap according to the invention.
**Figure 8** is a perspective view of a further embodiment according to the embodiment of Fig. 7.
**Figure 9** is a side view of the cap, showing the influence of the first side wall on the light cone.
**Figure 10** is a perspective view of an embodiment of the first sidewall.
**Figure 11** shows the contact of the sealing with the filter.
**Figure 12** is a side view of a camera assembly for a driver monitoring system, showing a graphic depiction of primary (outgoing), reflected, and harmful rays averted through the invention.

The figures only show examples of how the invention can be implemented and are not to be taken as a limitation of the invention to the examples shown.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

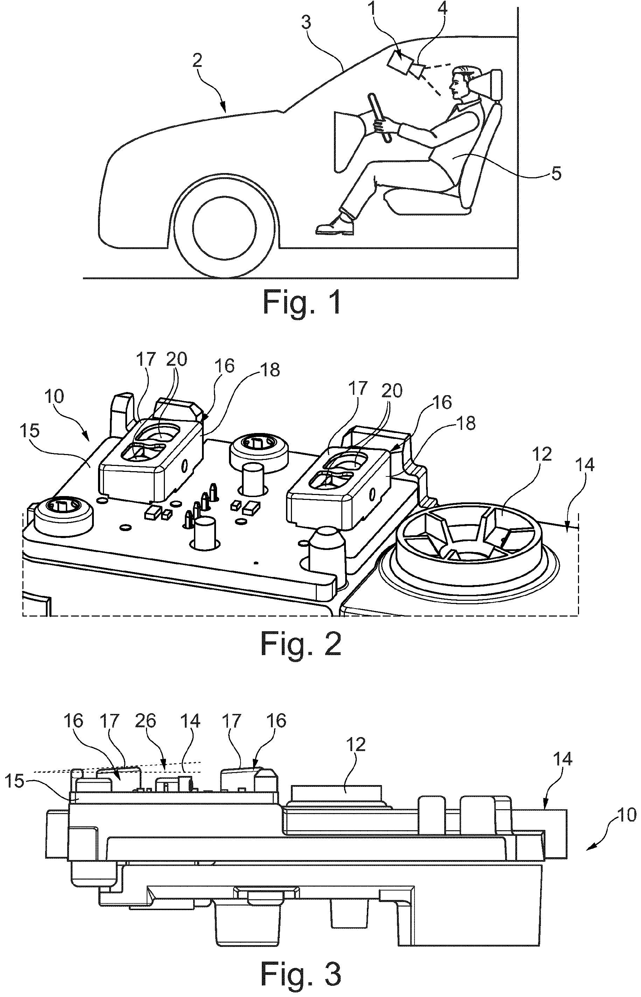

**Fig. 1** shows an embodiment of an arrangement of a driver monitoring system 1 inside a motor vehicle 2. Driver monitoring system 1 is mounted on or in the vicinity of a windshield 3 of motor vehicle 2, so that at least one vision device of driver monitoring system 1 is directed towards (in the sense of "looking at") a driver 5 of motor vehicle 2. In particular, an optic 4 of vision device, which is, for example, a vision camera, is directed towards driver 5. Additionally, one or more illumination sources with invisible light, wherein the illumination sources are in the form of LEDs (see for example Fig. 2). An optical filter 30 (see Fig, 10) is interposed between the camera assembly 10 (see Fig. 2) and driver 5.

**Figure 2** shows a perspective partial view of the camera assembly 10 according to one possible embodiment of the invention. A lens 12 is placed on a front face 14 of the camera assembly 10. Aside from the lens 12 a PCB 15 is placed on the front face 14. The PCB 15 carries at least one LED 20 which is used to illuminate the diver (see Fig. 1) in order to capture an image which is suitable carrying out valuable diagnostic functions. Each LED or arrangement of LEDs is covered by a cap 16. The cap 16 defines a pass-through section 17 of the cap 16 allows light from the LEDs 20 to pass through the cap 16. The cap 16 has a first sidewall 18 which faces the lens 12.

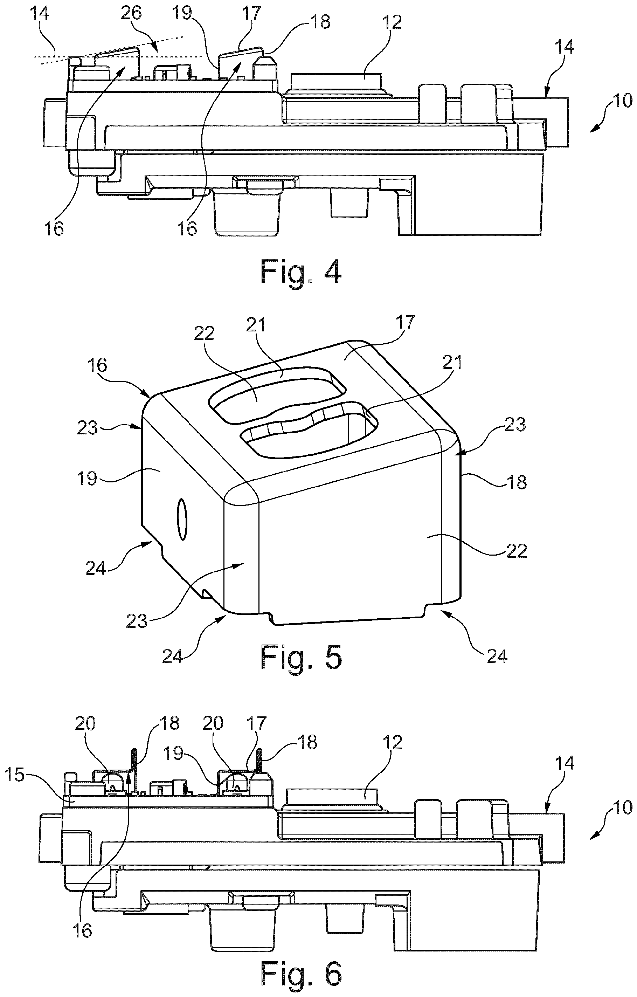

**Figure 3** shows a side view of the camera assembly 10 according to the embodiment, shown in Fig. 2. The printed circuit board 15 is positioned left from the lens 12. Shown are two caps 16, positioned on printed circuit board 15, wherein their pass-through section 17 is oriented at an angle 26 with respect to the front face 14 of the camera assembly 10. **Figure 4** shows a side view of the camera assembly 10 according to a further embodiment, shown in Fig. 2. The cap 16 the first sidewall 18 and the second side wall 19 which are parallel to each other. The first sidewall 18 is higher than the second sidewall 19. The height difference between the first sidewall 18 and the second sidewall 19 defines the angle 26 of the pass-through section 17 of the cap. The angle 26, as shown in the embodiment of Fig. 4 is larger than the angle 26, shown in the embodiment of Fig. 3.

A perspective view of a cap 16 according to one embodiment of the invention is shown in **Figure 5**. The cap 16 has the function of an optical barrier and is a surface mounted device. As described beforehand, the first sidewall 18 and the second side wall 19 of the cap 16 are parallel to each other, wherein the first sidewall 18 is higher than the second sidewall 19. The first sidewall 18 and the second side wall 19 are connected by the pass-through section 17. In the embodiment shown here, the pass-through section 17 has formed two openings 21 which allow the light from the LEDs to pass through. A variant of the embodiment of the cap 16 is shown in Fig 5. With this possible embodiment the cap 16 defines parallel sidewalls 22 which connect the first sidewall 18 and the second sidewall 19 and thereby fully surrounding the LED (not shown) or the LED cluster (not shown) as shown in Fig. 5.

A larger cap 16 (SMD) can be conceived which fully surrounds the LED (not shown) or the LED cluster (not shown). According to the embodiment as shown in Fig. 5 the corners 23 of the embodiment features a rectangular shape with suctioning areas 24 in the corners 23. Light could to a small degree escape through the suctioning areas 24, however this embodiment has the minimum gauge (footprint). The cap 6 is produced by deep-drawing technology.

**Figure 6** is a side view of the camera assembly 10 according to a further embodiment of the invention. Here the cap 16 is as well SMD, which is positioned on the printed circuit board 15 and above at least one LED 20. The cap 16 is defined by a first sidewall 18 and the second side wall 19, which are connected by a pass-through section 17. The pass-through section 17 is essentially parallel to the front face 14 or the printed circuit board 15.

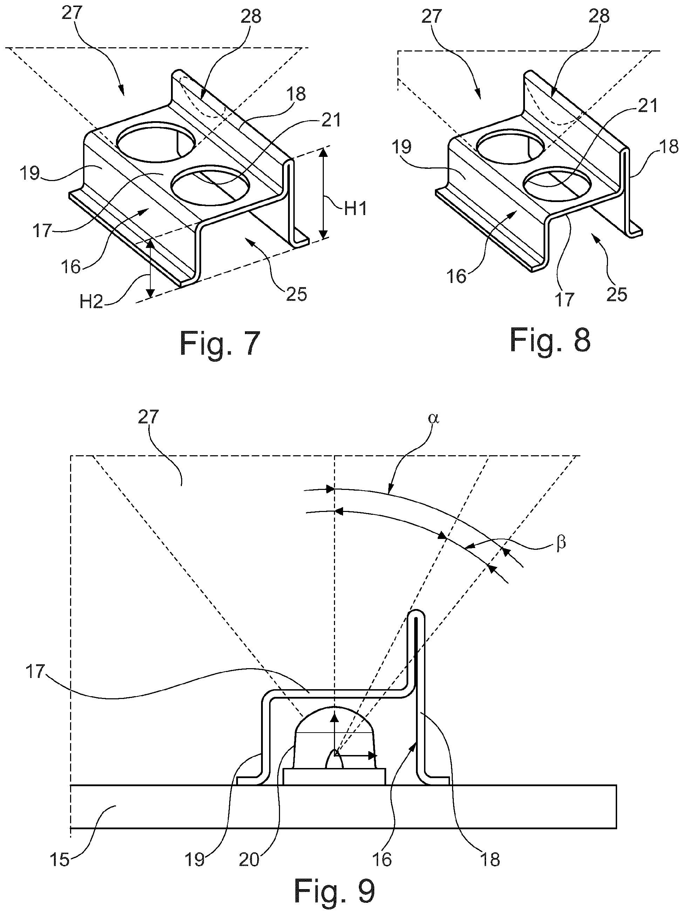

**Figure. 7** and **Figure 8** show perspective views of two different embodiments of a cap 16. The cap 16 is defined by the first sidewall 18, the second side wall 19 and a pass-through section 17. The cap 16 is open at opposing sides 25. It is true for all embodiments described herein that the first sidewall 18 has a height H1 and the second sidewall 19 has a height H2. The first sidewall 18, which faces the lens 12, is higher than the second side wall 19. The first sidewall 18 and the second side wall 19 are connected by a pass-through section 17 which has at least one opening 21 through which light from the LED can emerge. Figs 7 and 8 show the intersection 28 of the nominal light cone 27 with the fist sidewall 18, which is positioned towards the side of the lens 12. It can be seen from Figs 7 and 8 that only the rays closest to the lens 12 are obscured or reflected. The embodiment shown in Fig. 8 differs from the embodiment shown in Fig. 8 that the first sidewall 18 of Fig. 8 is higher than the first sidewall 18 of Fig. 7. The cap 12 is produced by bending technology.

The first sidewall 18 (obscuration rib) can serve as well as a mechanical protection to the LEDs 20, the PCB 15, the lens 12 and generally the housing (not shown), against accidental hitting when dropped.

**Figure 9** is a side view of the cap 16, showing the influence of the first side wall 18 on the light cone 27. The at least one LED 20 is placed on the printed circuit board 15 and positioned under the cap 16. The pass-through section 17, connecting the first side wall 18 and the second side wall 19, has the opening 21 (see Fig. 7 of Fig. 8) which forms the light cone 27, which defines a half opening angle α. It is evident for a skilled person that the diameter (not shown) influences the half opening angle α of the light cone 27. The height of the first side wall 18 (obscuration rib) defines an obscured angle β of the light cone 27. The obscured angle β needed with a specific application, in order to reduce glare, can be computed and easily implemented with slight adjustments to the manufacturing of the cap 16. The adjustment to the height of the first side wall 18 (obscuration rib) enabling a very precise fine tuning of glare.

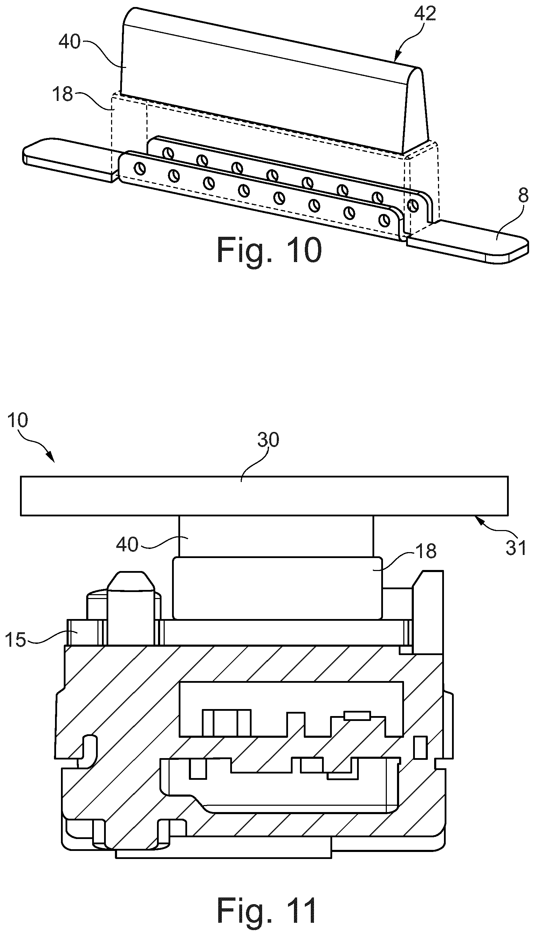

**Figure 10** is a perspective view of an embodiment of the first sidewall 18. The first sidewall 18 carries a sealing 40 which defines a top face 42. In the embodiment shown here, the first sidewall 18 is part of a mounting 8 .

**Figure 11** shows the contact of the sealing 40 with the filter 30 of the camera assembly 10. The cap 16 with the first sidewall 18 is positioned on the printed circuit board 15, which itself is on the front face of the 14 of the camera assembly 10. The first sidewall 18 and the sealing 40 together have a height so that the bottom side 31 of the filter 30 is at least contacted by a top face 42 of the sealing 40. According to further embodiment of the invention the top face 42 of the sealing 40 reaches into a recess (not shown) on the bottom side 31 of the filter 30. The sealing 40 is defined by an elastic body that can be easily added to the rigid first sidewall 18. The addition can be carried out by convenient technologies, like overmolding, vulcanization, curing or a form-in-place technology.

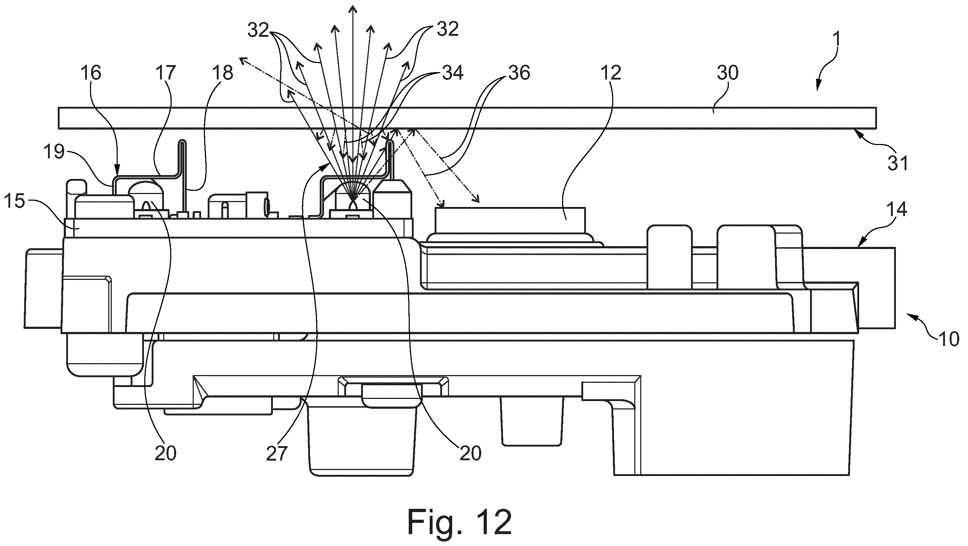

**Figure 12** shows a side view of a camera assembly 10 for a driver monitoring system 1. An optical filter 30 is positioned in the relation to the lens 12, the at least one LED 20 and the at least one cap 16, wherein all of which are positioned on the front face 14 of the camera assembly 10. The at least one LED 20 and the at least one cap 16 are placed on a printed circuit board 15.

The LEDs 20 emit the light cone 27 of primary rays 32 which exits the pass-through section 17 of the cap 16. A portion of the primary rays 32 is reflected by a bottom side 31 of the optical filter 30, thereby generating reflected rays 32. The first side wall 18 of the cap 16 is designed to block or reflect away the most harmful rays 36 in the immediate vicinity of the lens 12. The geometry features of the above-described embodiments of the cap 16 allow the useful primary rays 32 to pass. The foot print of the cap 16 can be accommodated on the printed circuit board 15 with a small space consumption. By slight adjustments of manufacturing and geometry of the cap 12, the glare reduction can be fine-tuned while irradiance loss on target (driver 5) is kept to a minimum.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### List of Reference Signs

- 1: Driver monitoring system
- 2: Motor vehicle
- 3: Windshield
- 4: Optic
- 5: Driver
- 8: Mounting
- 10: Camera assembly
- 12: Lens
- 14: Front face
- 15: Printed circuit board
- 16: Cap
- 17: Pass-through section
- 18: First sidewall
- 19: Second sidewall
- 20: Light-emitting diode; LED
- 21: Opening (in pass-through section)
- 22: Sidewall
- 23: Corner
- 24: Suctioning area
- 25: Side
- 26: Angle
- 27: Light cone
- 28: Intersection
- 30: Optical filter
- 31: Bottom side
- 32: Primary rays
- 34: Reflected rays
- 36: Harmful rays
- 40: Sealing
- 42: Top face
- H1: Height of first sidewall
- H2: Height of second sidewall
- α: Half opening angle of light cone
- β: Obscured angle of light cone

## Claims

1. A camera assembly (10) for a driver monitoring system (1) with glare protection, the camera assembly (10) including:
a lens (12), mounted on a surface of a front face (14) of the camera assembly (10),
at least one light-emitting diode (20) mounted on a printed circuit board (15), which itself is positioned on the surface of the front face (14) of the camera assembly (10) aside from the lens (12), and
an optical filter (30), spaced apart from the lens (12) and the at least one light-emitting diode (20);
**characterized by:**
a cap (16), defined by a pass-through section (17) connected to at least one first sidewall (18) and one second sidewall (19),
• wherein the cap (16) is positioned such on the printed circuit board (15) that each of the at least one light-emitting diode (20) passes light thorough a respective opening (21) of the pass-through section (17),
• wherein the first sidewall (18) of the cap (16) is next to the lens (12) of the camera assembly (10), and
• wherein the first sidewall (18), which points towards the lens (12), has a height (H1) which is greater than a height (H2) of the second sidewall (19).

2. The camera assembly (10) as defined in claim 1, wherein the first sidewall (18) blocks harmful rays (36) of a light cone (27) from reaching the lens (12) of the camera assembly (12), wherein the light cone (27) is defined by an opening (20) in the pass-through section (17) of the primary rays (32) emanating from the least one light-emitting diode (20) covered by the cap (16).

3. The camera assembly (10) as defined in any of the preceding claims, wherein a sealing is attached at least the first sidewall (18) and is dimensioned such that a top face (42) of the sealing (40) is in contact with a bottom side (31) of the optical filter (30).

4. The camera assembly (10) as defined by any of the preceding claims, wherein the cap (16), to be positioned over the at least one LED (20) on the printed circuit board (15), fully surrounds the at least one LED (20), wherein the cap (16) is defined by the first sidewall (18), the second sidewall (19), the interconnecting pass-through section (17) and parallel sidewalls (22), each of which connects the first sidewall (18) and the second sidewall (19).

5. The camera assembly (10) as defined claim 3, wherein the cap (16) is produced by a deep-drawing technology.

6. The camera assembly (10) as defined in the preceding claims 1 - 3, wherein the cap (12) to be positioned over the at least one LED (20) on the printed circuit board (15), is defined by the first sidewall (18), the second sidewall (19) and the interconnecting pass-through section (17), wherein the cap (12) is open on both sides (25).

7. The camera assembly (10) as defined in claim 6, wherein the first sidewall (18) and the second sidewall (19) are perpendicular to the interconnecting pass-through section (17).

8. The camera assembly (10) as defined in any of the claims 6 to 7, wherein the cap (16) is produced by a bending technology.

9. A vehicle (2) with a driver monitoring system (1) including camera assembly (10) as defined in the claims 1 - 8.
